# FASCICULE DE BREVET EUROPEEN

(11) **EP 1 965 649 B1**
(45) Date de publication et mention de la délivrance du brevet: **28.08.2013**
(21) Numéro de dépôt: 06848817.0
(22) Date de dépôt: 21.12.2006
(51) Int. Cl.: A01N 63/04, A01P 3/00, A01P 1/00

(54) **PROTECTION DES PLANTES CONTRE LEURS AGENTS PATHOGENES**
SCHUTZ VON PFLANZEN GEGEN IHRE KRANKHEITSERREGER
PROTECTION OF PLANTS AGAINST THEIR PATHOGENIC AGENTS

(30) Priorité: 21.12.2005 FR 0513050
(43) Date de publication de la demande: 10.09.2008
(73) Titulaire: Lesaffre et Compagnie, 75001 Paris (FR)
(72) Inventeur: PUJOS, Philippe, F-59000 Lille (FR)
(74) Mandataire: Cabinet Plasseraud
(86) Numéro de dépôt international: PCT/FR2006/051414
(87) Numéro de publication internationale: WO 2007/074303

(56) Documents cités:
- WO-A-99/03346
- JP-A- 2005 073 640
- OZERETSKOVSKAYA O L ET AL: "OLIGOSACCHARINS AS REGULATORY MOLECULES OF PLANTS" RUSSIAN JOURNAL OF PLANT PHYSIOLOGY, MOSCOW, RU, vol. 43, no. 5, 1996, pages 648-655, XP002061729 ISSN: 1021-4437
- NGUYEN T H ET AL: "Composition of the cell walls of several yeast species" APPLIED MICROBIOLOGY AND BIOTECHNOLOGY, vol. 50, no. 2, août 1998 (1998-08), pages 206-212, XP002398683 ISSN: 0175-7598
- MORILHAT J.P. ET AL.: "Etudes sur al composition chimique de la parois d'une levurecandida aprés croissance sur n- paraffine" MYCOPATHOLOGIA, vol. 61, no. 1, 1977, pages 49-54, XP009072285
- PILLEMER, L. ET AL.: "The Properdin system and Immunity- III the Zymosan assay of Properdinn" J. EXP. MED, vol. 103, no. 1, 1957, pages 1-13, XP002398776
- BUCK, J.W.: "Combinations of fungicides with Phyllopane Yeasrs for improved control of Botrytis cinerea on geranium Seedlings" PHYTOPATHOLOGY, vol. 94, no. 2, 2004, pages 196-202, XP002398684

## Description

La présente invention concerne méthodes pour protéger les plantes contre divers agents pathogènes tels que champignons, virus et bactéries. L'invention est utilisable, seule ou en alternance et/ou en combinaison avec d'autres moyens de protection des plantes, et est adaptée au traitement de multiples variétés végétales.

Parmi les agents pathogènes, les champignons, responsables des maladies fongiques ou cryptogamiques, sont ceux qui ont le plus grand impact économique. Chaque espèce végétale est sensible à une ou plusieurs maladies principales, susceptibles de réduire fortement sa vigueur, sa croissance, et finalement la quantité ou/et la qualité de la récolte.

Divers paramètres influencent le développement des maladies comme les conditions de sol et la fertilisation, la sensibilité variétale, le mode de conduite (rotation, travail du sol, nombre de plantes ou plants par hectare, système de taille, etc.), ou surtout les conditions climatiques. Mais agir sur certains de ces paramètres ne suffit généralement pas à limiter suffisamment les dégâts occasionnés par les maladies. Aussi, pour se prémunir, le praticien souhaitant optimiser et sécuriser son rendement, traitera sa culture au moment opportun avec un produit phytosanitaire, souvent préventif. Le plus souvent les produits utilisés sont des produits chimiques, pour la plupart très efficaces, mais pouvant présenter des risques sanitaires pour les personnes qui les manipulent et générateurs de résidus sur les productions traitées, dans les sols et les eaux. De plus, l'utilisation répétée de certaines matières actives fongicides agissant sur le même site métabolique, sélectionne des souches résistantes à ces fongicides.

Pour tenter d'y remédier, il est nécessaire de limiter le nombre d'utilisations annuelles de produits chimiques de la même famille, d'alterner les familles chimiques à modes d'action différents, et d'utiliser tous autres moyens défavorables à l'agent pathogène.

Dans ce contexte, il existe donc un besoin réel et important de solutions alternatives contre les maladies des plantes. Idéalement, ces solutions doivent agir de manière différente de celle des fongicides chimiques existants, ne pas générer de résidus chimiques dans les récoltes et dans l'environnement, et être plus sûres et saines pour les opérateurs. De tels traitements pourraient être utilisés, seuls ou en alternance et/ou combinaison avec les traitements chimiques actuels ou tout autre traitement, pour empêcher l'apparition ou limiter le développement de ces pathogènes, et de leurs souches résistantes, sur les végétaux, et limiter les risques pour l'homme et l'environnement.

### Résumé de l'invention

La présente invention fournit de nouvelles méthodes pour le traitement ou la protection des plantes contre des agents pathogènes. Plus particulièrement, l'invention réside dans la mise en évidence que, de manière inattendue, les parois ou écorces de levures possèdent la capacité de protéger efficacement les plantes contre l'infection par des agents pathogènes. Cet effet est obtenu par simple contact des parois ou écorces avec la plante, au moyen d'une pulvérisation par exemple.

Les résultats obtenus montrent que le traitement au moyen de parois ou écorces de levures confère une protection non seulement aux organes ou parties de plantes traités (action directe au point de contact), mais également aux organes apparus ultérieurement. Les parois ou écorces ne pouvant pas pénétrer dans la plante pour être véhiculées par la sève, il ne s'agit pas d'une systémie. Par contre, un tel résultat suggère un effet inducteur de mécanismes de défenses naturelles de la plante, et permet donc d'envisager une longue durée de protection, égale ou supérieure à un mois, et une action polyvalente des compositions et méthodes de l'invention.

Un objet de l'invention réside donc dans l'utilisation de parois ou écorces de levure(s) en tant que matière active, pour le traitement ou la protection des plantes contre les maladies produites ou provoquées par des agents pathogènes, notamment fongiques, bactériens ou viraux.

Un autre objet de l'invention réside dans l'utilisation de parois ou écorces de levure(s) en tant que matière active,

pour l'induction ou la stimulation chez une plante de défenses naturelles contre des agents pathogènes.

L'invention concerne également l'utilisation pour le traitement ou la protection des plantes contre les maladies produites ou provoquées par les agents pathogènes, notamment fongiques, bactériens ou viraux, comprenant l'application sur la plante ou une partie de celle-ci de parois ou écorces de levure(s).

L'invention a encore pour objet l'utilisation pour l'induction ou la stimulation chez une plante de défenses naturelles (contre des agents pathogènes), comprenant l'application sur la plante ou une partie de celle-ci de parois ou écorces de levure(s).

Comme il sera décrit plus en détails dans la suite du texte, l'invention est applicable à tous types de plante, et notamment aux graminées et dicotylédones, aux plantes annuelles, bisannuelles et pérennes, aux légumes, aux céréales dont le blé, l'orge et le riz, au maïs, sorgho, millet, aux oléagineux, aux protéagineux, aux pommes de terre, betteraves, cannes à sucre, tabac, aux plantes ligneuses, aux arbres, fruitiers ou non, aux vignes, aux végétaux d'ornement, etc. En outre, l'agent pathogène peut être de nature diverse, telle qu'un champignon, une bactérie, un virus, un mycoplasme, un spiroplasme ou un viroïde.

Les parois ou écorces de levure(s) utilisées dans l'invention peuvent provenir de toutes espèces de levures, en particulier de levures du genre Saccharomyces, notamment *S. cerevisiae,* et peuvent être obtenues ou préparées selon des techniques connues en soi de l'homme du métier, qui seront décrites dans la suite du texte, notamment par autolyse, séparation, concentration, etc.

Est décrite également une composition (phytopharmaceutique) comprenant des paroirs ou écorces de levure, pouvant être administrée ou appliquée sur une plante, ou mise en contact avec celle-ci, ou certains de ses organes seulement, quels qu'ils soient, choisis notamment parmi les feuilles, les fleurs, les fruits, la tige, le tronc, ou les racines. Une telle composition peut être qualifiée de préparation phytopharmaceutique.

La dite composition peut être sous forme de liquide, concentré ou non, de poudre, mouillable ou non, de granulés, dispersibles ou autres, ou de toute autre forme adaptée à la mise en contact des parois ou écorces de levures avec le ou les organes de la plante que cible le traitement, par exemple, pulvérisation après dilution, mise en suspension ou autre, dans l'eau ou un autre véhicule, sur les parties aériennes du végétal, apport au sol ou par solution nutritive, au niveau des racines de la plante, etc.

Dans des modes de mise en oeuvre préférés, les compositions de l'invention peuvent comprendre en outre des agents de formulation, dispersants, stabilisants, tensioactifs, etc.

Est décrite également une composition (phytopharmaceutique) comprenant des parois ou écorces de levure en combinaison avec un agent fongicide, antiviral ou antibactérien, en vue de leur application simultanée, séparée ou espacée dans le temps.

Encore un autre objet de l'invention réside dans l'utilisation pour lutter contre les maladies provoquées par des agents pathogènes chez des végétaux, comprenant l'application sur une plante d'écorces ou de parois de levure(s), éventuellement en alternance ou en combinaison avec un autre traitement actif contre ledit agent pathogène.

Un autre objet de l'invention réside dans l'utilisation pour prévenir ou freiner le développement de pathogènes résistant à une famille de substances actives, caractérisé en ce que la plante est traitée par des écorces ou parois de levure(s), en vue de réduire la pression de sélection des souches résistantes à la dite famille de substances actives, ou en ce que le(s) traitement(s) de la plante avec une substance de la dite famille de substances actives est (sont) alterné(s) ou combiné(s) avec un (des) traitement(s) de ladite plante par des écorces ou parois de levure(s), ou une composition comprenant des écorces ou parois de levure(s).

Est décrite encore l'utilisation d'une composition comprenant des écorces ou parois de levure(s) pour augmenter l'efficacité d'ensemble de la protection phytosanitaire, par la diminution du niveau d'infection et/ou la réduction de l'émission d'inoculum.

Est décrite aussi l'utilisation d'une composition comprenant des écorces ou parois de levure(s) pour obtenir une protection phytosanitaire partielle ou complète, de longue durée, par exemple de un mois et demie au moins.

L'invention décrit procédé pour limiter la quantité des résidus de produits agrochimiques dans ou sur les produits consommables, dans les sols et les eaux lors du traitement de cultures ou d'une plante, le procédé comprenant un (des) traitement(s) de ladite culture ou plante par des écorces ou parois de levure(s), ou une composition comprenant des écorces ou parois de levure(s).

L'invention décrit l'utilisation d'écorces ou parois de levure(s), ou d'une composition comprenant des écorces ou parois de levure(s), pour la prévention ou le traitement des maladies dans l'agriculture biologique ou écologique.

### Description détaillée de l'invention

Comme indiqué précédemment, l'invention concerne l'utilisation de produits pour lutter, à titre préventif ou curatif, contre les agents pathogènes chez les végétaux. L'invention repose notamment sur la mise en évidence des propriétés avantageuses et inattendues de parois et écorces de levure, et propose leur utilisation dans la lutte contre les maladies provoquées par des agents pathogènes chez les plantes.

La présente invention découle, notamment, de la découverte que les écorces et/ou parois de levures sont capables de protéger les organes ou parties de la plante traités directement par les compositions de l'invention (c'est-à-dire qu'elles exercent une action directe au site de contact), et aussi les organes ou parties de plante apparaissant après le traitement. Les parois ou écorces ne pouvant pas pénétrer dans la plante, pour être véhiculées par la sève, il ne s'agit pas d'une systémie. Par contre, cette propagation de la protection à la plante entière et aux organes nouvellement formés suggère un mécanisme d'induction ou de stimulation de défenses naturelles, tels ceux déjà connus avec l'acide b-aminobutyrique, l'acide 2,6-dichloroisonicotinique, l'acibenzolar-s-méthyl, ou certains extraits d'algues (brevets ou demandes de brevet n° FR2.868,253 ; WO03/092384 ; WO97/14310 et WO99/53761) ou encore avec les oligo β(1 - 3) glucanes (WO99/03346) ou le chitine ou le chitosane (Ozereskovskaye O.L. et al. (Russian Journal of Plant Physiology, 43(5), 1996, 648-655) et permet d'envisager une longue durée de protection, égale ou supérieure à un mois, et une action polyvalente des compositions de l'invention.

En outre, les parois ou écorces de levure selon l'invention n'ayant pas a priori d'effet direct sur les agents pathogènes, elles sont moins susceptibles de provoquer des phénomènes de résistance.

Les résultats présentés dans l'invention sont particulièrement surprenants, car ils montrent qu'il n'est pas nécessaire d'employer des molécules purifiées, mais que les parois ou écorces de levure entières sont actives sans que leurs composants n'aient été préalablement isolés ou séparés. En outre, il n'est pas nécessaire de procéder à des modifications chimiques subséquentes des écorces ou parois de levure.

L'invention concerne donc l'utilisation de parois ou écorces de levure(s) en tant que matière active, pour la protection des plantes contre les maladies provoquées par des agents pathogènes.

L'invention concerne également l'utilisation de parois ou écorces de levure(s) en tant que matière active, pour l'induction ou la stimulation chez une plante de défenses naturelles contre des agents pathogènes.

L'invention concerne également l'utilisation pour l'induction ou la stimulation chez une plante de défenses naturelles contre des agents pathogènes, comprenant l'application sur la plante ou une partie de celle-ci de parois ou écorces de levure(s).

Les parois et écorces de levure mises en oeuvre dans la présente invention peuvent être produites à partir de différents types de levures, éventuellement en mélange(s). La levure est de préférence une levure de boulangerie. Une levure de boulangerie est une levure appartenant au genre *Saccharomyces,* essentiellement produite par multiplication ou culture aérobie comme enseigné dans le chapitre 6 « Baker's yeast production » de l'ouvrage de référence « Yeast technology ». La levure peut également être une levure de brasserie, une levure oenologique ou une levure de distillerie. D'autres types de levures sont utilisables dans le cadre de la présente invention comme par exemple les levures des genres Kluyveromyces spp, Pichia spp, Metschnikowia spp ou Candida spp.

Une levure est une cellule, schématiquement composée d'une enveloppe et d'un contenu. L'enveloppe est dénommée « écorce » ou « paroi ».

Les produits industriels dénommés « parois » ou « écorces » de levures peuvent être produits de différentes façons, à partir de différents types de levure(s), éventuellement en mélange(s), en suivant des protocoles qui sont connus en soi de l'homme du métier.

Dans un mode de mise en oeuvre particulier, les écorces ou parois de levure(s) sont susceptibles d'être produites par lyse (autolyse ou hétérolyse) de cellules de levures, par exemple de *Saccharomyces cerevisiae,* suivie d'une séparation des parties solubles et insolubles, par exemple par des moyens physiques, comme la centrifugation, et récupération de la partie insoluble. La partie insoluble est ainsi typiquement récupérée par élimination de la partie soluble par centrifugation. La partie insoluble est nommée « écorces de levures », ou « parois de levures ». La partie soluble résultant de ce procédé, de couleur claire et à faible turbidité, est appelée « extrait de levure ».

L'autolyse des levures est une hydrolyse du contenu cellulaire de la levure, par ses propres enzymes. Elle est typiquement obtenue en plaçant une suspension de levure(s) dans certaines conditions physiques de milieu et/ou en contact avec des activateurs provoquant la mort des levures et la libération de ses enzymes dans le corps cellulaire. L'hydrolyse du contenu cellulaire produit des composés solubles. Séparée et récupérée, cette fraction soluble constitue l'« extrait de levure ». La fraction insoluble récupérée à l'issue de la dite séparation constitue le produit dénommé « écorces de levures » ou « parois de levure ». Ce produit comprend le cytosquelette des levures, et les membranes et composants non solubilisés par l'autolyse ou l'hétérolyse. La fraction insoluble est généralement récupérée sous la forme d'une suspension aqueuse d'écorces de levures, dont la concentration en matière sèche est typiquement de 10 à 15 % (poids/volume). Les écorces correspondent à environ 25 à 45 % du poids sec des cellules entières de levures, en moyenne à environ 35%.

On peut utiliser des écorces ou parois ayant été soumises à des traitements chimiques supplémentaires, d'extraction ou de fonctionnalisation par exemple, comme une délipidation. Dans un mode de mise en oeuvre préféré de l'invention, on utilise des écorces ou parois de levure non modifiées, c'est-à-dire notamment non soumises à de tels traitements.

Pour la mise en oeuvre de la présente invention, on peut utiliser des parois ou écorces de levure(s) ou toute composition comprenant des parois ou écorces de levure(s) provenant d'un même type de levure ou de plusieurs types ou espèces différents.

De tels produits sont également disponibles dans le commerce, tels que notamment Springcell 8001 0 PW de Biospringer SA (F-94 Maison-Alfort) ou Pronady de Prodesa (Bra. Valinhos).

Pour la mise en oeuvre de l'invention, on peut utiliser comme matière première toute préparation comprenant des parois ou écorces de levures, plus ou moins déshydratées. Dans un mode de mise en oeuvre préféré, on utilise une suspension aqueuse d'écorces ou parois de levures, de préférence concentrée à moins de 20 % de matière sèche, de préférence à moins de 17 % ou même 14 % de matière sèche. Dans un autre mode de mise en oeuvre préféré, on utilise des préparations issues du séchage de la suspension liquide, par exemple par atomisation, et contenant de préférence plus de 80% de matière sèche, de préférence plus de 85, 90, 93 ou 95 %.

Dans un mode particulier de mise en oeuvre de l'invention, on prépare des compositions (ou préparations) phytosanitaires (ou phytopharmaceutiques) plus ou moins concentrées, destinées à être mélangées pour leur application à un véhicule liquide ou solide, et comprenant, comme matière active, des écorces et/ou parois de levure(s) telles que définies ci-dessus. L'agriculture professionnelle utilise souvent des préparations phytosanitaires concentrées qui sont diluées à l'eau pour pulvérisation, ou mélangée à un engrais ou un amendement pour apport au sol. Dans un mode particulier, la composition de l'invention est donc une composition phytosanitaire concentrée, à formulation sèche ou liquide.

Selon un autre mode de mise en oeuvre particulier de l'invention, on prépare des compositions prêtes à l'emploi, qui peuvent être sous forme liquide ou solide. Dans une préparation prête à l'emploi, la matière active (comprenant les écorces ou parois de levure(s)) est déjà mélangée à un véhicule adapté à une utilisation chez les plantes, tel que par exemple un liquide pour remplir un pulvérisateur de type spray, un engrais, un substrat de culture sous serre, etc.

De telles préparations ou compositions peuvent comprendre, outre la matière active, tout agent de formulation adapté.

Ainsi, on peut utiliser selon l'invention toute composition, notamment de type phytopharmaceutique ou phytosanitaire, comprenant des parois ou écorces de levure.

Selon une première variante de réalisation, la composition est une composition sous forme sèche, par exemple de poudre ou granulé.

Selon une autre variante de réalisation, la composition est une composition sous forme liquide, de préférence sous forme liquide aqueuse. Il peut s'agir notamment d'une suspension, d'un gel, d'une crème, d'une pâte, etc.

Dans un mode de mise en oeuvre préféré, les compositions comprennent en outre un ou plusieurs agents de formulation. D'une façon générale, les compositions selon l'invention comprennent de 0,1 % à 99,9% (en poids) environ de matière active et un ou plusieurs agents de formulation, solides ou liquides.

Le ou les agents de formulation peuvent être constitué(s) de tout composé ou toute matière inerte permettant de rendre possible, faciliter, ou optimiser le transport, le stockage, la manipulation, et/ou l'application de la matière active sur la plante ou des parties de celle-ci. De tels agents sont adaptés à l'objectif recherché : conservation des agents actifs, tenue en suspension des parois ou écorces ou des autres substances actives lors du stockage ou lors de l'utilisation dans la préparation de la bouillie de traitement, anti-mousse, anti-poussière, adhésion au végétal, et autres. Ce ou ces agents peuvent être solide(s), liquide(s), seuls ou en mélange.

Le ou les agents de formulation, et notamment ceux adaptés à la pulvérisation, peuvent être choisis notamment parmi tous agents tensioactifs, dispersants, conservateurs, mouillants, émulsifiants, agents d'adhésion, tampon-pH, etc., seuls ou en mélanges.

Dans un mode de réalisation particulier, la composition comprend en outre un autre agent actif, de préférence un agent fongicide, antibactérien ou antiviral. L'agent fongicide peut être choisi par exemple parmi les fongicides agrochimiques organiques, ou les fongicides minéraux inorganiques à base de soufre et/ou de cuivre par exemple.

Des exemples de fongicides agrochimiques organiques actuellement disponibles sont notamment les chloronitriles dont le chlorothalonil, les carbamates dont les dithiocarbamates comme le mancozèbe, les phtalimides dont le captane, les sulfamides, les guanidines, les quinones, les quinoléines, les thiadiazines, les anilides, hydroxyanilides, et phénylamides, les imidazolinones, oxazolidinediones, les strobilurines, les cyanoimidazoles, le fluazinam, le dinocap, le sithiofam, les dicarboximides, le fludioxonil, les organo-phosporés, le propamocarbe HCl, la diphénylamine, les pyridylamines, les inhibiteurs de la biosynthèse des stérols (IBS), dont les imidazoles, pyrimidines, les hydroxypyrimidines, les anilinopyrimidines, les triazoles, la spiroxamine, les morpholines et les pipéridines, le fenhexamid, l'hymexazol, le zoxamide, le diéthofencarbe, les benzimidazoles, le pencycuron, , le quinoxyfène, l'iprovalicarbe, le cymoxanil, le dimethomorphe, les phosphonates, les triazines, etc.

L'invention peut aussi être utilisée en alternance, association ou combinaison avec un ou plusieurs composés éliciteurs de défenses chez les plantes, tels que par exemple l'acide b-aminobutyrique, l'acide 2,6-dichloroisonicotinique, l'acibenzolar-s-méthyl ou certains extraits d'algues (brevets ou demandes de brevet n° FR2,868,253 ; WO03/092384 ; WO97/14310 et WO99/53761). Des exemples de tels composés sont notamment la laminarine et les ulvanes.

Les produits ou compositions utilisés selon l'invention peuvent être appliqués de différentes manières et selon différents protocoles ou programmes de traitements.

Dans un mode préféré de mise en oeuvre, les produits ou compositions sont appliqués par pulvérisation, notamment pulvérisation foliaire ou au sol.

En variante, il est possible d'appliquer les produits ou compositions sous forme de mélange à des engrais, support de culture, à l'eau d'arrosage, ou autre. La composition peut ainsi être administrée aux racines par pulvérisation au sol, incorporation mécanique, en mélange avec des engrais, des amendements, en pré-mix, ou autres.

Ainsi, l'invention décrit toute composition, notamment de type phytopharmaceutique (ou phytosanitaire) ou prête à l'emploi, comprenant des parois ou écorces de levure en tant que matière active. De telles compositions comprennent avantageusement un ou des excipients adaptés à une application sur des végétaux, comme par exemple sous forme de pulvérisation, de spray, ou de poudrage, notamment pour utilisation domestique ou le jardinage. De telles compositions peuvent en outre comprendre un ou plusieurs agents actifs supplémentaires, tels que par exemple un agent fongicide, antibactérien, antiviral, ou un ou des engrais, en vue de leur application simultanée, séparée ou séquentielle sur des végétaux. D'autres compositions prêtes à l'emploi par exemple en mélange avec un engrais pour apport au sol, ou un support de culture sont utilisables.

Les produits ou compositions utilisés selon l'invention peuvent être appliqués sur toute la plante ou sur une ou des parties seulement de celle-ci, telles que par exemple les feuilles, les tiges, les fleurs, les fruits, le tronc et/ou les racines. Ils peuvent également être utilisés sur le matériel de propagation des végétaux, comme par exemple les semences, les graines ou les plants, en mottes ou non. Compte tenu de leur mode d'action proposé, les produits de l'invention doivent permettre de protéger efficacement les végétaux contre des agents pathogènes pendant une période de temps importante, pouvant dépasser un mois. Bien entendu, une application répétée peut être envisagée, à des intervalles à définir par l'utilisateur.

La quantité appliquée est définie par l'homme du métier, en fonction notamment de l'agent pathogène à traiter, du type de végétal, des combinaisons utilisées, etc. La quantité appliquée est de préférence suffisante pour protéger la plante contre un agent pathogène, ou pour limiter ou supprimer le développement et les effets de l'agent pathogène présent. Cette quantité peut être déterminée par exemple par des essais en champ.

Selon l'invention, la composition est appliquée ou utilisée à une dose d'emploi efficace supérieure à 1 mg/l d'écorces ou parois de levure lorsque le produit est appliqué par pulvérisation jusqu'à la limite du ruissellement, ou supérieure à 1 g/ha dans les cas de pulvérisation à faible volume d'eau. De préférence, la dose efficace est comprise entre 1 et 1000 mg/l d'écorces ou parois de levure lorsque le produit est appliqué par pulvérisation jusqu'à la limite du ruissellement, ou encore entre 1 et 1000 g/ha dans d'autres cas.

Dans un mode de mise en oeuvre particulier, la composition est appliquée ou utilisée à une dose d'emploi efficace comprise entre 1 et 250 mg/l d'écorces ou parois de levure, de préférence entre 2,5 mg et 25 mg/l, lorsque le produit est appliqué par pulvérisation jusqu'à la limite du ruissellement, ou encore entre 1 et 250 g/ha, de préférence entre 2,5 et 25 g/ha dans d'autres cas, comme par exemples dans les cas de pulvérisation à faible volume d'eau. Indépendamment de la dose d'emploi, la composition peut être produite, transportée et/ou vendue à diverses concentrations. Ainsi, lorsque la préparation est sous forme sèche, elle peut contenir par exemple 96% en poids de parois ou écorces de levures. Une préparation liquide peut être sous forme de suspension comprenant par exemple 13% de parois ou écorces de levures en matière sèche. La préparation peut également être prête à l'emploi, c'est-à-dire par exemple comprendre des parois ou écorces de levures à une concentration de 25mg/l environ. Il est entendu que la concentration en matière active dans les préparations de l'invention ou lors de leur application peut être adaptée par l'homme du métier, et que des doses supérieures à celles mentionnées ci-dessus peuvent être mises en oeuvre.

En outre, comme indiqué précédemment, les produits et compositions de l'invention peuvent être utilisés en alternance et/ou en combinaison avec un ou plusieurs autres traitements.

Un objet particulier de l'invention réside dans une utilisation pour lutter contre les maladies provoquées par des champignons chez des végétaux, comprenant l'application sur une plante d'écorces ou de parois de levure(s), en alternance ou en combinaison avec un traitement antifongique.

Un autre objet de l'invention réside dans une utilisation pour lutter contre les maladies provoquées par des bactéries chez des végétaux, comprenant l'application sur une plante d'écorces ou de parois de levure(s), en alternance ou en combinaison avec un traitement antibactérien.

Un autre objet de l'invention réside dans une utilisation pour prévenir ou freiner le développement de souches de champignons résistantes à une famille d'agents fongicides, caractérisé en ce que la plante est traitée par des écorces ou parois de levure(s), ou une composition comprenant des écorces ou parois de levure(s), en vue de réduire la pression de sélection des souches résistantes à ladite famille d'agents fongicides, ou en ce que le(s) traitement(s) de la plante avec une substance de ladite famille d'agents fongicides est (sont) alterné(s) ou combiné(s) avec un (des) traitement(s) de ladite plante par des écorces ou parois de levure(s), ou une composition comprenant des écorces ou parois de levure(s).

Un autre objet de l'invention réside dans une utilisation pour prévenir ou freiner le développement de souches de bactéries résistantes à une famille d'agents antibactériens, caractérisé en ce que la plante est traitée par des écorces ou parois de levure(s), ou une composition comprenant des écorces ou parois de levure(s), en vue de réduire la pression de sélection des souches résistantes à ladite famille d'agents antibactériens, ou en ce que le(s) traitement(s) de la plante avec ledit agent antibactérien est (sont) alterné(s) ou combiné(s) avec un (des) traitement(s) de ladite plante par des écorces ou parois de levure(s), ou une composition comprenant des écorces ou parois de levure(s).

L'invention est applicable au traitement de tout type de plante, en plein champ, verger, forêt, serre ou de plantes d'intérieur ou de jardin. L'invention est ainsi applicable notamment aux graminées et dicotylédones, aux plantes annuelles, bisannuelles et pérennes, aux plantes légumières, aux céréales dont le blé, l'orge et le riz, au maïs, sorgho, millet, aux oléagineux, aux protéagineux, aux pommes de terre, betteraves, cannes à sucre, tabac, aux plantes ligneuses, aux arbres, fruitiers ou non, aux vignes, aux végétaux d'ornement, etc.

Dans un premier mode de mise en oeuvre particulier, la plante est un arbre fruitier, par exemple un arbre fruitier à pépins en particulier choisi parmi les pommiers, les poiriers et les agrumes.

Dans un autre mode de réalisation particulier, la plante est choisie parmi la vigne, les céréales notamment le blé, le colza, la betterave, la pomme de terre, le haricot, la tomate, le concombre, la laitue ou encore le fraisier.

Il est entendu que l'invention ne saurait être limitée à un type particulier de plante, mais qu'elle peut être utilisée sur tous végétaux.

L'invention peut étre appliquée à la lutte contre tout type d'agents pathogènes, et notamment des champignons, virus, bactéries, mycoplasmes, spiroplasmes ou viroïdes. A titre d'exemples particuliers d'agents pathogènes, on peut citer notamment les champignons des genres Alternaria spp par exemple A. solani, Ascochyta spp par exemple *A. fabae* ou *A. pinodella,* Botrytis spp par exemple *B. cinerea,* Bremia spp par exemple *B. lactucae,* Cercospora spp par exemple *C. beticola,* Cladosporium spp par exemple *C. allii-cepae,* Colletotrichum spp par exemple C. graminicola, Erysiphe spp par exemple *E. graminis,* Fusarium spp par exemple *F. oxysporum* et F. roseum, Glocosporium spp par exemple *G. fructigenum,* Guignardia spp par exemple *G. bidivellii,* Helminthosporium spp par exemple *H. tritici-repentis,* Marssonina spp par exemple *M. rosae,* Monilia spp par exemple M. fructigena, Mycosphaerella spp par exemple *M. brassicicola,* Penicilium spp par exemple *P. expansum* ou *P. digitatum,* Peronospora spp par exemple *P. parasitica ,* Pezicula spp, Phragmidium spp par *P. rubi-idaei* Phytophtora spp dont *P. infestans,* Plasmopara spp dont *P.viticola,* Podosphaera spp par exemple *P. leucotricha,* Pseudocercosporella spp dont *P. brassicae,* Pseudoperonospora spp par exemple *P. cubensis,* Pseudopeziza spp par exemple *P. medicaginis,* Puccinia spp *P. graminis,* Pythium spp , Ramularia spp dont *R betae,* Rhizoctonia spp par exemple *R. solani,* Rhizopus spp, par exemple R. *nigricans,* Rynchosporium spp, comme *R. secalis,* Sclerotinia spp comme *S sclerotiorum,* Septoria spp par exemple *S. nodorum* ou *S. tritici,* Sphaerotheca spp comme *S. macurlaris,* Taphrina spp par exemple *T pruni,* Uncinula spp par exemple *U. necator,* Ustilago spp par exemple *U. tritici* et Venturia spp par exemple *V. inaequalis.*

Un agent pathogène particulier est Venturia inaequalis, qui est responsable de la tavelure sur pommiers.

Des exemples de bactéries qui affectent les cultures incluent notamment les genres Corynebacterium, Clavibacter, Curtobacterium, Streptomyces, Pseudomonas, Xanthomonas, Erwinia spp et particulièrement *E. amylovora, E. carotovora. E. chrysanthemi.* Des exemples de virus affectant les cultures sont par exemple les virus de la mosaïque du tabac, ou le virus Y de la pomme de terre

Un objet particulier de la présente demande concerne l'utilisation de parois ou écorces de levure(s) en tant que matière active, le traitement de la tavelure, notamment chez les arbres fruitiers, notamment la tavelure du pommier. Un autre objet de l'invention concerne un procédé pour le traitement de la tavelure, notamment des arbres fruitiers, notamment du pommier, comprenant l'application sur la plante de parois ou écorces de levure(s), ou d'une composition comprenant des parois ou écorces de levure.

L'invention concerne l'indication ou la stimulation des défenses naturelles d'une plante contre la tavelure, notamment chez les arbres fruitiers, comprenant l'application sur ladite plante ou une partie de celle-ci de parois ou écorces de levure(s), ou d'une composition comprenant des parois ou écorces de levure(s).

L'invention concerne la prévention ou le freinage du développement de souches de *Venturia* résistantes à un agent fongicide, caractérisé en ce que le(s) traitement(s) de la plante avec ledit agent fongicide est (sont) alterné(s) ou combiné(s) avec un (des) traitement(s) de ladite plante par des écorces ou parois de levure(s), ou une composition comprenant des écorces ou parois de levure(s). Dans un mode spécifique, le procédé est utilisé pour freiner le développement de souches résistantes de *Venturia inequalis* et/ou de *Venturia pirina.*

Est décrite l'utilisation d'écorces ou parois de levure(s), ou d'une composition comprenant des écorces ou parois de levure(s), pour la prévention ou le traitement de la tavelure dans l'agriculture biologique ou écologique.

La présente demande décrit l'utilisation de parois ou écorces de levure(s), ou d'une composition comprenant des parois ou écorces de levure(s), pour le traitement de la cercosporiose, notamment chez la betterave. Un autre objet de l'invention concerne un procédé pour le traitement de la cercosporiose, notamment chez la betterave, comprenant l'application sur la plante de parois ou écorces de levure(s), ou d'une composition comprenant des parois ou écorces de levure.

L'invention décrit un procédé pour induire ou stimuler les défenses naturelles d'une plante contre la cercosporiose, notamment chez la betterave, comprenant l'application sur ladite plante ou une partie de celle-ci de parois ou écorces de levure(s), ou d'une composition comprenant des parois ou écorces de levure(s).

Un autre objet de l'invention réside dans l'utilisation d'écorces ou parois de levure(s) en tant que matière active, pour la prévention ou le traitement de la cercosporiose dans l'agriculture biologique ou écologique.

D'autres aspects et avantages de la présente invention apparaîtront à la lecture des exemples qui suivent, qui doivent être considérés comme illustratifs et non limitatifs.

### Exemples

### Exemple 1 : Essai d'efficacité contre la tavelure du pommier de compositions comprenant des écorces de levures.

La tavelure constitue la maladie principale des arbres fruitiers à pépins. Sur pommier, l'agent responsable en est *Venturia inaequalis,.*

En l'absence de traitement, la tavelure entraînerait des pertes de rendements et de qualité des récoltes pouvant atteindre jusqu'à 70% de la valeur de la récolte, ce qui conduit l'arboriculteur à protéger son verger au prix de 10 à 15 traitements phytosanitaires au cours de la saison. Les conséquences économiques et environnementales en sont très lourdes.

Les quantités de matières actives ainsi apportées représentent à elles seules plus de la moitié des apports de matières actives agrochimiques globalement appliquées sur les pommiers, une des cultures les plus consommatrices de produits phytosanitaires. De tels apports génèrent d'importantes quantités de résidus dans les sols, les eaux, et sur les fruits eux-mêmes.

Les traitements actuellement disponibles contre la tavelure peuvent être regroupés en quatre familles de produits :
Les produits de contacts, non pénétrants, et donc sensibles au lessivage par la pluie, non mobiles et donc laissant sans protection les organes apparus après le traitement, ce qui implique de retraiter dés que de nouveaux organes (feuilles, fruits) ont poussé ou grossi.

Les anilinopyrimidines, partiellement pénétrantes, mais ne protégeant pas non plus les organes apparus après traitement, et sélectionnent des souches résistantes de *Venturia.*

Les strobilurines, légèrement mobile dans la plante, et développent des souches résistances.

Les inhibiteurs de la synthèse des stérols (IBS) sont systémiques : ils diffusent par la sève. Ils protègent ainsi les organes se développant après le traitement. Ces produits sont aussi sujets au développement de résistances.

Limiter les résistances impose de limiter à 2 ou 3 la répétition des traitements à base de produits agrochimiques de la même famille, et d'alterner les familles.

Dans ce contexte, la mise à disposition d'une nouvelle composition agissant différemment, produisant un effet durable, et n'apportant pas de résidus chimiques, serait un réel avantage pour l'arboriculteur, le consommateur et l'environnement
Ce premier exemple démontre l'efficacité d'écorces et parois de levures pour la protection de pommiers contre la tavelure.

### Matériel et Méthodes

L'essai est conduit sous serre en conditions contrôlées, sur des jeunes pommiers issus de semis.

Une population de pépins issus d'une pollinisation ouverte est mise à vernaliser à 4°C en boîtes de Pétri remplies de sable et humectées à saturation pendant 90 à 120 jours

L'humectation du sable est entretenue tous les 15 jours.

Dès la germination des premiers pépins, un semis de tous les pépins est effectué dans des terrines en plastique de 40 x 30 x 15 cm, à raison de soixante pépins par terrine, dont 50 seulement seront retenus pour le test. Les pépins sont déposés dans des pastilles de tourbe réhydratées posées sur un lit de terreau (CombiTree B MG de la firme DCM) contenant un mélange d'engrais (NPK 7-7-10 à 2kg/m³ et NPK 15-8-12 à diffusion lente, à 2kg/m³).

Les terrines sont recouvertes de terreau, humectées et mise à une température avoisinant 10°C durant une semaine avant d'être mises en serre à 18°C. Le cas échéant, une protection insecticide est assurée pendant l'essai.

Les plantules sont traitées à partir du stade 3-4 feuilles déployées, à raison de deux traitements successifs, séparés d'une semaine. Le pathogène (*Venturia inaequalis)* est inoculé trois jours après le second traitement. Les notations sont effectuées 14 jours et 21 jours après l'inoculation.

Le dispositif statistique est à 3 répétitions, chacune correspondant à une terrine de 50 plantules.

L'essai compare 3 doses d'une suspension aqueuse (eau déminéralisée) OY d'écorces de levures apportant respectivement 2,5 mg/l, 25 mg/l et 250 mg/l d'écorces) à un témoin traité à l'eau déminéralisée.

Les écorces utilisées ici correspondent au produit Springcell 8001 de Biospringer SAS, (Maisons-Alfort, France), composé d'écorces à 96 % de matière sèche.

**Tableau 1**

| Objets | Produits | Concentrations (mg/l) |
|---|---|---|
| OY1 | Ecorces | 250 |
| OY2 | Ecorces | 25 |
| OY3 | Ecorces | 2,5 |
| Témoin non traité | Eau | - |

Le traitement est fait par pulvérisation après agitation, avec un pulvérisateur manuel de 500ml (marque BIRCHMEIER). On interrompt la pulvérisation à la limite du ruissellement. La dernière feuille déployée au jour précédent le traitement est dénommée « F1 », et repérée par un lien fixé au pétiole.

La feuille nouvellement formée ou déployée après le traitement, et qui n'a pas reçu la composition de traitement, est nommée « F0 ». Lorsque cette feuille est formée mais non déployée lors du traitement, elle est masquée pendant la pulvérisation. L'inoculation intervenant 3 jours après traitement, F0 est au moins partiellement déployée lors de cette opération.

L'inoculum de *Venturia inaequalis* est préparé comme suit.

Des feuilles tavelées ont été récoltées pendant l'été dans différents vergers. Après séchage pendant 20 jours, les feuilles sont mises en sachets plastiques et conservées au congélateur à -18°C. Le jour de l'utilisation, on place ces feuilles dans une bouteille de 1litre, contenant 200 ml d'eau de pluie, puis on agite manuellement pendant 10 minutes. La suspension est filtrée à l'étamine, et le volume obtenu est mesuré.

On dénombre les conidies obtenues au microscope sur un hématocymètre de Bürker, à raison de 2 comptages de 2x144 carreaux, dont on fait la moyenne. Ce nombre de conidies est multiplié par la constante de Bûrker (250 000), et, pour obtenir un nombre de conidies viables, corrigé d'un coefficient de germination des conidies, lui-même résultat d'un test effectué la veille.

Sur cette base, le la suspension de spores est diluée jusqu'à obtenir 150 000 conidies viables par ml. Il faut alors environ 1 litre de suspension pour inoculer 1000 plants..

Les plants sont inoculés par pulvérisation manuelle, d'une suspension de 150 000 conidies viables de *Venturia* par ml, et transférés en chambre humide à saturation pour 48 heures.

Les notations concernent F1 et F0. Elles expriment la surface de feuille sporulante, en pourcentage de la surface de la feuille.

La moyenne des 50 plants est calculée pour chaque répétition. La moyenne des 3 répétions de chaque objet (ou modalité) conduit à la moyenne par objet. Enfin, l'efficacité selon Abott est calculée, selon la formule :
Efficacité = [(Notation « eau ») - (Notation objet testé)]/ (Notation « eau »)

### Résultats

Les résultats sont présentés dans le tableau 2 ci-dessous.

**Tableau 2**

| Notations | Surface sporulante / feuille (%) | | Efficacité (%) | |
|---|---|---|---|---|
| Objets | F1 | F0 | F1 | F0 |
| Eau | 41,46 | 15,83 | 0 | 0 |
| OY1 | 17,75 | 10,39 | 57,2 | 34,4 |
| OY2 | 14,59 | 7,6 | 64,8 | 52,0 |
| OY3 | 16,9 | 8,9 | 59,2 | 43,8 |

Les résultats obtenus montrent que les produits selon l'invention sont capables d'induire une diminution significative de la surface sporulante, tant sur feuilles traitées F1, que sur feuilles F0 formées après le traitement.

Dans ce dernier cas, les parois ou écorces ne pouvant pas pénétrer dans la plante pour être véhiculées par la sève, il ne s'agit probablement pas d'une systémie. Par contre, un tel résultat suggère un effet inducteur de mécanismes de défenses naturelles de la plante.

### Exemple 2 : Essai d'efficacité contre la tavelure de compositions comprenant des écorces de levures.

L'essai a été conduit sur plants greffés, en pots. Trois variétés étaient utilisées : 'Reinette des Capucins', 'Jonagold', et 'Reinette de Waleffe', greffées sur porte-greffe M9. Les mises en croissance des variétés sous tunnel plastique ont été décalées de façon à ce que les plants soient tous au même stade lors de l'essai. Reinette de Waleffe, puis 15 jours plus tard, Reinette des Capucins, puis 1 semaine plus tard, Jonagold.

Les plants sont étiquetés avec le nom de la variété et le numéro du traitement qu'ils recevront avant l'inoculation.

Les méthodes de traitement, de préparation de l'inoculum, d'inoculation et de notation sont semblables à celles décrites dans l'exemple 1.

Les plants sont traités à raison de deux traitements successifs, séparés de 10 jours. Le lendemain du second traitement, la dernière feuille déployée « f1 » est repérée.

Deux jours après le second traitement, le pathogène (*Venturia inaequalis*) est inoculé à la dose de 1,5 *10⁵ conidies/ml, directement en chambre humide. L'inoculation est suivie d'une incubation de 48 heures en chambre humide à 18°C, puis les plants restent dans des logettes conditionnées à 18° ± 2°C et 80 ± 10% d'H.R.

Le dispositif étudié est le suivant (tableau 3) :

**Tableau 3**

| Variétés | Objets | Produits | Concentrations (mg/l) |
|---|---|---|---|
| Jonagold | OY2 | Ecorces | 25 |
| Jonagold | BABA | Acide β-aminobutyrique | 2.000 |
| Jonagold | Témoin | Eau | - |
| Waleffe | OY2 | Ecorces | 25 |
| Waleffe | BABA | Acide β-aminobutyrique | 2.000 |
| Waleffe | Témoin | Eau | - |
| Capucins | OY2 | Ecorces | 25 |
| Capucins | BABA | Acide β-aminobutyrique | 2.000 |
| Capucins | Témoin | Eau | - |

Les écorces de levures OY2 correspondent à une suspension aqueuse à 25 mg/l du produit Springcell 8001 de Biospringer SAS, (Maisons-Alfort), France), lui-même composé d'écorces à 96 % de matière sèche.

Les notations sont effectuées le vingt et unième jour après l'inoculation sur les 2 dernières feuilles traitées (F2 et F1) et la feuille néoformée après traitement F0, sur environ 25 pousses par objet. L'ensemble des résultats est reporté ci-dessous, tableau 4.

**Tableau 4**

| | | Surface sporulante / feuille (%) | | | Efficacité (%) | | | | |
|---|---|---|---|---|---|---|---|---|---|
| Variétés | Objets | F2 | F1 | F0 | F2 | F1 | F0 | F traitées | Toutes F |
| Capucins | eau | 17,5 | 19,8 | 7,8 | - | - | - | - | - |
| Capucins | baba | 4,2 | 8,0 | 4,3 | 75,8 | 59,8 | 45,3 | 67,8 | 60,3 |
| Capucins | OY2 | 3,2 | 7,1 | 4,2 | 81,6 | 64,4 | 46,7 | 73,0 | 64,2 |
| | | | | | | | | | |
| Jonagold | eau | 40,3 | 36,1 | 22,4 | - | - | - | - | - |
| Jonagold | baba | 6,0 | 17,9 | 13,9 | 85,1 | 50,5 | 38,0 | 67,8 | 57,9 |
| Jonagold | OY2 | 13,6 | 12,7 | 13,7 | 66,2 | 64,8 | 38,8 | 65,5 | 56,6 |
| | | | | | | | | | |
| Waleffe | eau | 31,1 | 31,4 | 23,3 | - | - | - | - | - |
| Waleffe | baba | 18,6 | 20,4 | 20,9 | 40,3 | 35,2 | 10,3 | 37,8 | 28,6 |
| Waleffe | OY2 | 5,5 | 14,5 | 10,7 | 82,2 | 54,0 | 54,1 | 68,1 | 63,4 |
| | | | | | | | | | |
| Toutes | eau | 29,6 | 29,1 | 17,8 | - | - | - | - | - |
| Toutes | baba | 9,6 | 15,4 | 13,0 | 67,6 | 47,1 | 27,0 | 57,4 | 47,2 |
| Toutes | OY2 | 7,5 | 11,4 | 9,5 | 74,8 | 60,8 | 46,6 | 67,8 | 60,8 |

Toutes variétés et toutes feuilles confondues, l'efficacité est en moyenne de : 60,8 %. Elle est en moyenne de 68,8 % sur les feuilles traitées F2 et F1, et de 46,6 % sur les feuilles F0 néoformées.

Cette efficacité est voisine, mais toujours supérieure à celle obtenue avec le BABA à la même période.

Une notation à 41 jours après traitement donne les résultats suivants :

**Tableau 5**

| | Surface sporulante / feuille (%) | | | | | | Efficacité (%) | | |
|---|---|---|---|---|---|---|---|---|---|
| Variétés | Objets | F2 | F1 | F0 | F-1 | F-2 | Feuilles traitées | Feuilles néoformées | Toutes feuilles |
| Capucins | eau | 90,00 | 33,55 | 36,13 | 22,57 | 4,33 | - | - | - |
| Capucins | baba | 4,00 | 10,62 | 14,07 | 9,95 | 4,00 | 88,2 | 55,5 | 77,1 |
| Capucins | OY2 | 1,80 | 7,76 | 15,69 | 11,07 | 1,92 | 92,3 | 54,5 | 79,5 |
| | | | | | | | | | |
| Jonagold | eau | 50,73 | 67,69 | 64,92 | 51,54 | 22,44 | - | - | - |
| Jonagold | baba | 10,57 | 27,57 | 37,79 | 29,57 | 3,43 | 67,8 | 49,0 | 57,7 |
| Jonagold | OY2 | 20,42 | 35,71 | 52,19 | 32,56 | 12,29 | 52,6 | 30,1 | 40,5 |
| | | | | | | | | | |
| Waleffe | eau | 50,00 | 54,30 | 61,35 | 56,06 | 20,18 | - | - | - |
| Waleffe | baba | 15,55 | 42,00 | 41,05 | 45,16 | 18,42 | 44,8 | 24,0 | 33,0 |
| Waleffe | OY2 | 0,50 | 15,40 | 18,59 | 17,31 | 8,07 | 84,8 | 68,0 | 75,2 |
| | | | | | | | | | |
| Toutes | eau | 63,6 | 51,8 | 54,1 | 43,4 | 15,7 | - | - | - |
| Toutes | baba | 10,0 | 26,7 | 31,0 | 28,2 | 8,6 | 68,1 | 40,1 | 54,2 |
| Toutes | OY2 | 7,6 | 19,6 | 28,8 | 20,3 | 7,4 | 76,4 | 50,0 | 63,4 |

A cette date, de nouvelles feuilles ont été déployées : F-1 et F-2, et la maladie a progressé par contamination naturelle, sans nouvelle inoculation.

Toutes variétés et toutes feuilles confondues, l'efficacité est en moyenne de : 63,4 %. Elle est en moyenne de 76 % sur les feuilles traitées, F2 et F1, et de 50 % sur les feuilles néoformées : F0, F-1 et F-2.

A nouveau, cette efficacité est voisine, mais toujours supérieure à celle obtenue avec le BABA à la même période.

On notera la très longue persistance de l'effet fongicide, très supérieure à celle des produits agrochimiques (de l'ordre de 7 à 15 jours).

### Exemple 3 : Essai de protection contre la cercosporiose de la betterave

Un essai à petite échelle a été conduit sous serre sur cercosporiose de la betterave. Cette maladie fongique est provoquée par *Cercospora beticola.*

Des graines de la variété de betterave FORTIS réputée sensible à la cercosporiose ont été semées dans des germoirs. A la levée, les jeunes plantules ont été repiquées dans des pots maintenus en serre à 24°C, sous une photopériode de 16 heures de lumière par jour. Le dispositif expérimental comportait 2 blocs (2 répétitions) de 8 plantes par modalité (ou objet).

Les plants étaient traités une seule fois, au stade 4 feuilles par pulvérisation sur les feuilles de préparations contenant des écorces de levures.

Les préparations, codées OY, étaient composées d'écorces de levures (Springcell 8001 de Biospringer SAS, composé d'écorces à 96% de matière sèche) en suspension aqueuse.

Le traitement consistait à pulvériser après agitation les préparations obtenues, à l'aide d'un pulvérisateur manuel. Le traitement, effectué au stade 4 feuilles de la betterave, ciblait les 2 dernières feuilles complètement développées et assurait une couverture des 2 faces foliaires jusqu'à la limite du ruissellement.

Les plantes traitées étaient maintenues dans une enceinte sous atmosphère maintenue humide par arrosage régulier du substrat.

Les plants étaient inoculés 1 semaines plus tard, au stade 6 feuilles, par pulvérisation d'une suspension de conidies de *C. beticola* souche 524, à 20 000 spores par ml, sur les deux faces foliaires, jusqu'à limite du ruissellement, puis les plantes étaient maintenues en atmosphère humide.

La souche 524 de *Cercospora beticola* fournie par l'Unité de Phytopathologie de la Faculté Universitaire de Gembloux (Belgique) a été choisie du fait de son agressivité. La souche a été cultivée en boîtes de Pétri sur du milieu V8 sous forme de colonies individualisées. Au bout de 5 jours d'incubation à l'obscurité dans une chambre de culture à température de 24°C, les colonies individualisées étaient récupérées dans un tube stérile contenant 3ml d'eau distillée stérile. La préparation ainsi obtenue était alors vortexée pour libérer les conidies du pathogène. La suspension conidienne était ensuite utilisée pour ensemencer de nouvelles boîtes de Pétri contenant du milieu V8 fraîchement préparé. Les cultures ainsi préparées étaient incubées à 24°C dans une chambre de culture où la photopériode était de 16 heures de lumière. Au bout d'une semaine d'incubation, la culture était récupérée et une suspension de conidies était préparée par grattage superficiel de la culture dans de l'eau distillée en utilisant une lame de Scalpel. On procédait ensuite à un comptage du nombre de conidies dans la suspension conidienne en utilisant la cellule de Bürker, et la suspension conidienne était ajustée à 20.000 conidies par millilitre dans de l'eau distillée.

Les plantes ainsi inoculées sont maintenues dans ces conditions de forte humidité.

L'importance des symptômes est évaluée un mois plus tard à l'aide de l'échelle visuelle utilisée par l'Institut Royal Belge pour l'Amélioration de la Betterave (IRBAB), qui comporte 10 valeurs de 0 à 9, sur laquelle la valeur 9 corresponds à 100% de surface foliaire saine (non couverte par des lésions), et la valeur 0 à 0% de surface foliaire saine (non couverte par des lésions).

Le traitement est effectué au moyen d'une suspension d'écorces codée OY, à différentes concentrations, OY1, OY2, OY3, décrites dans le tableau 6 ci-dessous.

**Tableau 6**

| Objets | Produits | Concentrations (mg/l) |
|---|---|---|
| OY1 | Ecorces | 250 |
| OY2 | Ecorces | 25 |
| OY3 | Ecorces | 2,5 |
| Témoin non traité | Eau | - |

La note obtenue par chaque objet, en moyenne des deux répétitions est reportée dans le tableau 7 ci-dessous.

**Tableau 7**

| Objets | Note moyenne | Surface saine en % | Qualificatif IRBAB |
|---|---|---|---|
| Témoin non traité | 3,94 | 85 | Insuffisant |
| OY1 | 4,69 | 91 | Acceptable |
| OY2 | 6,34 | 97,5 | Très acceptable |
| OY3 | 6,22 | 97,1 | Très acceptable |

Dans cet exemple 3, les écorces permettent de passer d'une appréciation moyenne de dégât qualifiée d'insuffisante à une appréciation qualifiée de très acceptable.

### Exemple 4 : Essai de protection de blé contre la septoriose.

La septoriose (*Septoria nodorum, et*/*ou Septoria tritici*) est la principale maladie foliaire du blé en Europe, occasionnant encore des pertes de rendements pouvant aller jusqu'à 40% de la récolte. La lutte chimique consiste généralement en un traitement systématique au stade 2-3 noeuds pouvant être suivi d'un traitement au stade épiaison. Cet essai montre que l'apport précoce d'une préparation à base de parois ou écorces de levures permet de retarder l'apparition de la maladie, et de remplacer le premier traitement chimique. Ce qui se traduit par des bénéfices sur les plans toxicologiques pour l'opérateur et le consommateur (résidus) et sur le plan environnemental.

### Matériel et méthodes

L'essai a été conduit en France, en plein champ, sur une culture de blé tendre d'hiver de la variété Orvantis, mise en place le 06.10.2005.

L'essai a été conduit selon la méthode CEB N° M189 (Commission des Essais Biologiques, de l'Association Française pour la Protection des Plantes, Paris) et en respectant les Bonnes Pratiques Expérimentales.

Le dispositif statistique consiste en des blocs de Fisher randomisés. Chaque modalité compte 4 répétitions, chacune correspondant à une parcelle élémentaire de 8x 2,5 m (20m²).

L'essai vise à comparer l'effet d'écorces de levures utilisées en suspension aqueuse (Springcell 8001 de Biospringer SAS, composé d'écorces à 96% de matière sèche), codées OY, lorsqu'elles sont utilisées au début d'un programme de traitement contre la septoriose.

La référence chimique utilisée ici est Opus (epoxyconazole 125g/L, BASF Agro) utilisé à 1L/ha.

Le traitement est conduit à raison de 200 L/ha à l'aide d'un pulvérisateur brouette équipé d'une rampe de pulvérisation de 2,50m.

Suivant les modalités, le programme de traitement varie comme indiqué dans le tableau suivant. Toutes les modalités reçoivent Opus à 1L/ha 40 jours après le premier traitement.

**Tableau 8**

| N° de modalité | T au stade « fin tallage/ épi à 1 cm » | T + 7 jours | Stade « 2-3 noeuds » | 2^{eme} traitement, à T + 40 jours |
|---|---|---|---|---|
| 1 | Témoin sec non traité | - | - | OPUS 1L/ha |
| 2 | Témoin traité eau | - | - | OPUS 1L/ha |
| 3 | - | - | Opus 1 L/ha | OPUS 1L/ha |
| 4 | OY à 2,5 g/ha | - | - | OPUS 1L/ha |
| 5 | OY à 25 g/ha | - | - | OPUS 1L/ha |
| 6 | OY à 250 g/ha | - | - | OPUS 1L/ha |
| 7 | OY à 50 g/ha | - | - | OPUS 1L/ha |
| 8 | OY à 25 g/ha | OY à 25 g/ha | - | OPUS 1L/ha |

Cinq notations ont été réalisées sur la période de l'essai afin d'évaluer la fréquence et l'intensité d'attaque de la septoriose :
- Notation 1 : le 04.04.06 à T1 (BBCH 31) Stade épi à 1cm.
- Notation 2 : le 28.04.06 à T3 (BBCH 32) Stade deuxième noeud ;
- Notation 3 : le 15.05.06 à T4 (BBCH 39) stade dernière feuille étalée..
- Notation 4 : le 29.05.06 à T4 + 15 jours (BBCH 55) stade mi-épiaison.
- Notation 5 : le 22.06.06 à BBCH 71 stade grain aqueux.

Le calendrier de réalisation de l'essai est donc le suivant (N = notation) :

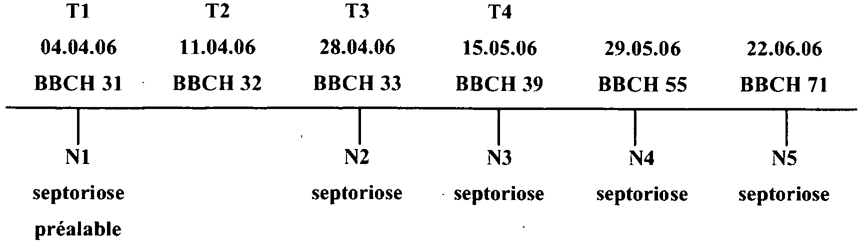

Pour chaque notation, la fréquence et l'intensité ont été estimées sur 3 étages foliaires (F1, F2, F3), F1 désignant la dernière feuille visible entièrement déroulée, sur 25 pieds prélevés au hasard.

La fréquence correspond à un pourcentage de feuilles atteintes par la septoriose. L'intensité correspond à un pourcentage moyen de surface foliaire atteinte par la maladie.

La moyenne des 25 pieds est calculée pour chaque répétition. La moyenne des 4 répétitions pour chaque modalité conduit à la moyenne par modalité. Enfm, l'efficacité selon Abott est calculée.

### Résultats

Lors des 4 premières notations, l'intensité de la maladie est restée faibles (< 3 % dans le témoin non traité). L'efficacité des modalités OY n'apparaît pas statistiquement significative. A la 5^{ème} notation, la maladie est déclarée et l'intensité supérieure à 95 % dans le témoin non traité sur la feuille F3.

A cette date, les résultats, significativité des différences, et pourcentages d'efficacité sont les suivants :

**Tableau 9**

| % surface foliaire atteinte | Feuille F1= % efficacité | | | Feuille F2= % efficacité | | | Moy F1+F2= % efficacité | | | | Feuille F3= % efficacité | | |
|---|---|---|---|---|---|---|---|---|---|---|---|---|---|
| 1. Témoin sec | 13,5 | A | - | 45,2 | A | - | 29,35 | A | - | | 96,3 | AB | - |
| 2. Témoin traité à l'eau | 12,7 | A | - | 33,6 | B | - | 23,15 | A | - | | 96,1 | AB | - |
| 3. Opus 1L/ha | 3,4 | B | 74,80% | 13 | C | 71,20% | 8,2 | B | 73,00% | | 87,5 | AB | 9,10% |
| 4. OY à 2,5 g/ha | 4,4 | B | 67,40% | 13,3 | C | 70,60% | 8,85 | B | 69,00% | | 98,2 | A | -2,00% |
| 5. OY à 25 g/ha | 4,7 | B | 65,20% | 15,3 | C | 66,10% | 10 | B | 65,65% | | 95,6 | AB | 0,70% |
| 6. OY à 250g/ha | 3,7 | B | 72,60% | 13,9 | C | 69,20% | 8,8 | B | 70,90% | | 84,8 | AB | 11,90% |
| 7. OY à 50g/ha | 3,2 | B | 76,30% | 15,4 | C | 65,90% | 9,3 | B | 71,10% | | 92,9 | AB | 3,50% |
| 8. OY à 25g/ha + OY à 25g/ha | 3,6 | B | 73,30% | 9,7 | C | 78,50% | 6,65 | B | 75,90% | | 90,2 | AB | 6,30% |

Les résultats montrent une diminution significative de l'intensité de la maladie sur F1 et F2, 80 jours après l'application en premier traitement, et ce quelque soit la dose testée de OY. Mieux encore, les efficacités obtenues en moyenne sur F1 et F2 avec OY sont toutes statistiquement équivalentes à celle obtenue avec la référence chimique Opus.

### Exemple 5 : Essai de protection du pois protéagineux contre l'anthracnose.

L'anthracnose est une des principales maladies foliaires du pois, et pénalise fortement le rendement en grains. Elle est provoquée par un champignon *Ascochyta pisi.*

### Matériel et méthodes

L'essai a été conduit en France, en plein champ, sur une culture de pois protéagineux de printemps de la variété Lumina. La culture a été mise en place le 22 mars.

L'essai a été conduit selon la méthode CEB N° M215 (Commission des Essais Biologiques, de l'Association Française pour la Protection des Plantes, Paris) et en respectant les Bonnes Pratiques Expérimentales.

Le dispositif statistique consiste en des blocs de Fisher randomisés. Chaque modalité compte 4 répétitions, chacune correspondant à une parcelle élémentaire de 8x 2,5 m (20m²).

L'essai comprend :
- 2 témoins : 1 sec et 1 traité à l'eau : modalités 1 et 2
- 1 référence chimique (Dithane Neotec : Mancozèbe 75%, Dow Agroscience) appliquée deux fois : modalité 3
- 3 modalités d'écorces de levures, utilisées en suspension aqueuse à différentes concentrations (Springcell 8001 de Biospringer SAS, composé d'écorces à 96% de matière sèche), codée OY, modalités 4 à 6 :
   c Modalité 4 : 25 g/ha
   c Modalité 5 : 250 g/ha
   c Modalité 6 : deux traitements espacés d'une semaine, à 25g/ha puis 25 g/ha

Le traitement est conduit à raison de 200 L/ha à l'aide d'un pulvérisateur brouette équipée d'une rampe de 2,50m.

Les premières applications ont été réalisées le 17.05.2006 au stade de 7-8 feuilles.

Une contamination artificielle est pratiquée le 19.05.06 a l'aide de mycélium et spores fraîches d*'Ascochyta pisi* sur grains d'orge (20 kg de grains/1000 m²), fourni par la société ARBIOTECH.

Le positionnement des traitements est le suivant :

**Tableau 10**

| N° de la modalité | T : 1ére feuille trifoliée | T+7 jours | Floraison |
|---|---|---|---|
| 1 | Témoin | - | - |
| 2 | Témoin eau | - | - |
| 3 | Dithane Neotec (2,1 kg/ha) | - | Dithane Neotec (2,1 kg/ha) |
| 4 | OY à 25 g/ha | - | - |
| 5 | OY à 250 g/ha | - | - |
| 6 | OY à 25 g/ha | OY à 25 g/ha | - |

La notation est réalisée le 10.06.06 au stade BBCH 67 (stade floraison), afin d'évaluer la fréquence et l'intensité d'attaque de l'anthracnose sur les feuilles. alu

Le calendrier de réalisation de l'essai est donc le suivant :

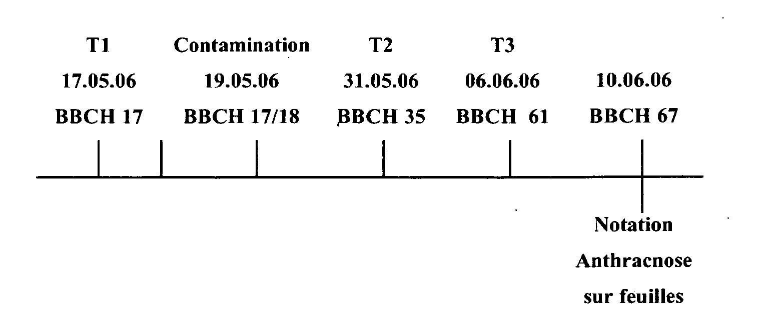

Lors de la notation, la fréquence et l'intensité ont été estimées sur 3 étages foliaires (bas-moyen- haut) sur 25 pieds par parcelle élémentaire.

La fréquence correspond à un pourcentage de feuilles atteintes par la maladie. L'intensité correspond à un pourcentage moyen de surface foliaire atteinte.

La moyenne des 25 pieds est calculée pour chaque répétition. La moyenne des 4 répétitions pour chaque modalité conduit à la moyenne par modalité. Enfin, l'efficacité selon Abott est calculée.

Une analyse de variance est effectuée, ainsi qu'un test de Neuman et Keuls, afin d'évaluer la significativité des différences entre modalités (mêmes lettres : résultats non différents au risque de 5% ; lettres différentes : résultats différents au risque de 5%).

### Résultats

Malgré la contamination artificielle, les infestations en anthracnose sont restées d'un niveau assez faible (intensité < 8% dans le témoin non traité).

A la notation, les résultats et les pourcentages d'efficacité sont les suivants.

**Tableau 11 : Intensité d'attaques d'anthracnose sur feuilles et efficacité**

| Intensité d'attaques d'anthracnose sur feuilles en % (10.06.2006 BBCH 67) et efficacité (Eff) | | | | | | | | | | |
|---|---|---|---|---|---|---|---|---|---|---|
| N° | Traitements | Etage Bas | | Eff | Etage moyen | | Eff | Moyenne bas + moyen | Etage Haut | |
| 1 | Témoin sec | 6.20 | A | - | 3.35 | A | - | -- | 0.07 | B |
| 2 | Témoin traité à l'eau | 5.83 | AB | - | 3.31 | A | - | - | 0.2 | B |
| 3 | Dithane Neotec (2,1kg/ha)( 2 fois) | 4.35 | C | 30% | 2.07 | BC | 38% | 34% | 0 | B |
| 4 | OY à 25 g/ha | 4.72 | C | 24% | 2.25 | BC | 33% | 29% | 0.38 | A |
| 5 | OY à 250 g/ha | 4.87 | CB | 21% | 1.52 | C | 54% | 38% | 0.02 | B |
| 6 | OY à 25g/ha + OY à 25g/ha | 4.33 | C | 30% | 2.45 | B | 27% | 29% | 0.07 | B |

L'étage haut n'étant pas encore attaqué, l'évaluation se fait sur l'étage bas et moyen. Toutes les doses testées d'OY montrent une efficacité équivalente à celle de la référence chimique.

### Exemple 6 : Essai de protection de la vigne contre l'oïdium (Erysiphe necator).

L'oïdium (*Uncinula necator, Erysiphe necator*) est une maladie fongique de la vigne présente dans tous les vignobles avec des intensités différentes selon les régions et les cépages. C'est la maladie de la vigne la plus répandue dans le monde. L'oïdium attaque tous les organes de la vigne et peut entraîner des pertes de production très importantes.

### Matériel et méthodes

L'essai a été réalisé sous serre, en pots, sur des jeunes plants du cépage Cinsaut. Les conditions étaient contrôlées, et la contamination artificielle.

Les plants étaient produits en serre à partir de boutures à un oeil, et des lots homogènes ont été constitués.

Le dispositif statistique comportait 6 répétitions de 1 pot chacune. La répétition donnant le résultat le plus éloigné de la moyenne était éliminée lors de l'analyse.

Les traitements ont été effectués avec un banc de pulvérisation à jet projeté et pression constante sur l'ensemble du végétal, et les plantes d'un même lot ont été traitées simultanément. Le banc est constitué d'un chariot pulvérisateur, se déplaçant sur un rail à vitesse constante et comportant 5 buses (2 de chaque coté et une au-dessus du végétal). Le volume de traitement était équivalent à 600 litre par ha.

Lors du traitement, les niveaux foliaires étaient marqués par un lien de couleur fixé sous la 3^{ème} feuille étalée de façon à pouvoir observer l'effet du traitement sur les feuilles néoformées (formées après le traitement).

Les traitements ont été appliqués 14 ou 7 jours avant la contamination artificielle. Un lot de plantes a été traité deux fois, soit 14 puis 7 jours avant la contamination.

Les produits testés étaient des écorces de levures utilisée en suspension aqueuse (Springcell 8001 de Biospringer SAS, composé d'écorces à 96% de matière sèche), codées OY.
4 doses ont été testées :
- dose N/10 : 2,5 g/ha
- dose N : 25 g/ha
- dose 2N : 50 g/ha
- dose 10N : 250 g/ha

Les doses ont été testées suivant le calendrier de traitement suivant :

**Tableau 12**

| | Nombre de jours entre traitement et inoculation | |
|---|---|---|
| N° modalité | T 14 j avant inoculation | T 7 j avant inoculation |
| **1** | Témoin non traité | - |
| **2** | OY N (25 g/ha) | - |
| **3** | - | Témoin non traité |
| **4** | - | OY N/10 (2,5 g/ha) |
| **5** | - | OY N (25 g/ha) |
| **6** | - | OY 2N (50 g/ha) |
| **7** | - | OY 10N (250 g/ha) |
| **8** | OY N (25 g/ha) | OY N (25 g/ha) |

Le matériel fongique était constitué d'un ensemble de conidies issues d'une souche de sensibilité normale aux fongicides.

Toutes les plantes de l'essai ont été contaminées par saupoudrage à sec de spores au dessus des plantes placées à l'intérieur d'une tour d'inoculation en plexiglas.

Le matériel fongique utilisé est constitué d'un ensemble de spores d'une souche d'oïdium multipliée au préalable en grande quantité sur des feuilles en survie ou sur des plantes. L'inoculum utilisé est âgé de 12 à 14 jours pour l'oïdium de la vigne. La qualité de l'inoculation a été vérifiée au moyen d'une cellule de Malassez placée au niveau des plantes à l'intérieur de la tour d'inoculation. Une densité de 800 à 1000 spores par cm² a été utilisée.

Toutes les plantes ont été mises en incubation après leur contamination dans une salle climatisée à 21 ± 2°C et éclairée 14 heures par jour. Chaque condition de l'essai a été parfaitement isolée des autres sous mini-enceintes.

Les plantes sont restées dans ces conditions pendant 14 jours. Au terme de cette période, une notation des dégâts du champignon a été réalisée.

### Notations

Les feuilles des niveaux foliaires supérieurs F2, F1 et F0 (niveau formé après le traitement) ont été notées. Chaque feuille est notée par observation visuelle. La fréquence (pourcentage de feuilles atteintes par la maladie) n'est pas notée car égale à 100. L'intensité (pourcentage moyen de surface foliaire atteinte) est évaluée selon une échelle de 0 à 100.

L'efficacité selon Abott est calculée sur les intensités moyennes, et une analyse de variance est effectuée. Un test de Neuman et Keuls, permets d'évaluer la significativité des différences entre modalités (mêmes lettres : résultats non différents au risque de 5% ; lettres différentes : résultats différents au risque de 5%).

### Résultats

**Tableau 13 : Taux de dégâts sur des plantes traitées à différentes dates (14 et 7 jours avant inoculation d'E. necator) avec la spécialité codée OY (Springcell 8001 de Biospringer SAS). Observation sur feuilles sensibles F2, F1, F0 :**

| Modalité | Nombre de jours entre le traitement et l'infection | Intensité d'attaque (%) | | Efficacité |
|---|---|---|---|---|
| Témoin | 14 jours | 47,4 | AB | - |
| N | 14 jours | 48,0 | AB | 0 |
| Témoin | 7 jours | 61,3 | A | - |
| N/10 | 7 jours | 40,1 | AB | 34,6 |
| N | 7 jours | 32,7 | ABC | 46,7 |
| 2N | 7 jours | 23,3 | BC | 62 |
| 10N | 7 jours | 21,3 | BC | 65,3 |
| N+N | 14 jours + 7 jours | 14,1 | C | 70,3 |

Une seule application 14 jours avant inoculation n'a pas permis de protéger les feuilles. A l'inverse les applications effectuées 7 jours avant contamination produisent un effet de protection contre l'oïdium. Les doses les plus fortes (2N soit 50g/ha et 10N, soit 250g/ha) ont un effet plus significatif.

Une application de 25g/ha (dose N) 14 jours avant inoculation, suivie d'une identique, 7 jours avant inoculation, donne un excellent résultat.

### Exemple 7 : Essai de protection de la vigne contre le mildiou (Plasmopara viticola).

Le mildiou est du au champignon (*Plasmopara viticola*). Présent à des degrés divers dans la plupart des vignobles du monde, il nuit au rendement et à la qualité de la récolte, au point de pouvoir annihiler celle-ci en l'absence de traitement.

### Matériel et méthodes

L'essai a été réalisé sous serre, en pots, sur des jeunes plants du cépage Cabernet-Sauvignon. Les conditions étaient contrôlées, et la contamination artificielle.

Les plants ont été produits en serre à partir de boutures à un oeil, et des lots homogènes ont été constitués.

Le dispositif statistique comportait 6 répétitions de 1 pot chacune. La répétition donnant le résultat le plus éloigné de la moyenne a été éliminée lors de l'analyse.

Les traitements ont été effectués avec un banc de pulvérisation à jet projeté et pression constante sur l'ensemble du végétal, et les plantes d'un même lot sont traitées simultanément. Le banc est constitué d'un chariot pulvérisateur, se déplaçant sur un rail à vitesse constante et comportant 5 buses (2 de chaque coté et une au-dessus du végétal). Le volume de traitement était équivalent à 600 litre par ha.

Lors du traitement, les niveaux foliaires ont été marqués par un lien de couleur fixé sous la 3^{ème} feuille étalée de façon à pouvoir observer l'effet du traitement sur les feuilles néoformées (formées après le traitement).

Les traitements ont été appliqués 14 ou 7 jours avant la contamination artificielle. Un lot de plantes a été traité deux fois, soit 14 puis 7 jours avant la contamination.

Les produits testés étaient des écorces de levures utilisée en suspension aqueuse (Springcell 8001 de Biospringer SAS, composé d'écorces à 96% de matière sèche), codées OY.
4 doses ont été testées :
- dose N/10 : 2,5 g/ha
- dose N : 25 g/ha
- dose 2N : 50 g/ha
- dose 10N : 250 g/ha

Les doses ont été testées suivant le calendrier de traitement suivant :

**Tableau 14**

| | Nombre de jours entre traitement et inoculation | |
|---|---|---|
| N° modalité | T 14 j avant inoculation | T 7 j avant inoculation |
| 1 | - | - |
| 2 | - | OY N/10 (2,5 g/ha) |
| 3 | - | OY N (25 g/ha) |
| 4 | - | OY 10N (250 g/ha) |
| 5 | - | OY 2N (50 g/ha) |
| 6 | OY N (25 g/ha) | OY N (25 g/ha) |
| 7 | OY N (25 g/ha) | - |

Les plantes ont été inoculées simultanément par pulvérisation d'une suspension de sporocystes issus d'une souche de *Plasmopara viticola* normalement sensible aux fongicides.

La suspension de sporocystes a été préparée juste avant la contamination. Les sporulations du champignon ont été récupérées par lavage de feuilles infectées avec de l'eau permutée. Une titration a été réalisée à l'aide d'une cellule de Malassez. La concentration utilisée était de 50 000 spores/ml.

10ml de suspension de spores ont été pulvérisés par plante, sur la face inférieure des feuilles. Chaque plante a été contaminée individuellement, à tous les niveaux de feuilles présentes.

Les plantes ont ensuite été regroupées par modalité, et les modalités ont été isolées les unes des autres par des enceintes closes.

Les plantes ont alors été maintenues sous brumisation pour favoriser le développement de la maladie, à une température de 21°C, et 14 heures d'éclairage par jour, pendant 8 jours. Au terme de cette durée, les notations ont été effectuées.

### Notations

Chaque feuille est notée par observation visuelle. La fréquence (pourcentage de feuilles atteintes par la maladie) n'est pas notée car égale à 100.

L'intensité (pourcentage moyen de surface foliaire atteinte) est évaluée selon une échelle de 0 à 100.

L'efficacité selon Abott est calculée sur les intensités moyennes.

### Résultats

Les résultats d'intensité et les efficacités ont été regroupés selon qu'il s'agissait de feuilles traitées ou de feuilles néoformées, donc non traitées.

**Tableau 15**

| | | Feuilles traitées | | Feuilles néo formées | |
|---|---|---|---|---|---|
| Modalité | Nombre de jours entre le traitement et l'infection | Intensité d'attaque (%) | Efficacité (%) | Intensité d'attaque (%) | Efficacité (%) |
| Témoin | 14 jours | 68,0 | - | 67,3 | - |
| N | 14 jours | 31,3 | 54 | 45,0 | 33,1 |
| Témoin | 7 jours | 82,0 | - | 48,1 | - |
| N/10 | 7 jours | 62,7 | 23,5 | 40,5 | 15,8 |
| N | 7 jours | 54,7 | 33,3 | 23,6 | 50,9 |
| 2N | 7 jours | 50,0 | 39 | 23,5 | 51,1 |
| 10N | 7 jours | 42,7 | 47,9 | 28,0 | 41,8 |
| N+N | 14 jours + 7 jours | 25,4 | 62,6 | 40,7 | 39,5 |

Toutes les doses d'écorces testées ont eu une efficacité sur le mildiou des feuilles traitées ou néoformées, quelque soit le délai séparant le traitement de la contamination. L'efficacité tend à croître avec la dose.

### Exemple 8 : Essai en plein champ de protection de la vigne contre le mildiou.

### Matériel et méthodes

L'essai a été réalisé en France, prés de Bordeaux, en plein champ, sur vigne de la variété Cabernet-Sauvignon. L'essai a été conduit en respectant les Bonnes Pratiques Expérimentales.

L'installation des parcelles de l'essai et les premières applications ont été réalisées le 25.05.2006 au stade BBCH 55. Le dispositif statistique consiste en des blocs de Fisher randomisés. Chaque modalité compte 4 répétitions, chacune correspondant à une parcelle élémentaire de 10 ceps. L'essai comprend :
- 1 témoin non traité ;
- 2 modalités OY en suspension aqueuse (Springcell 8001 de Biospringer SAS, composé d'écorces à 96% de matière sèche).

Le traitement est conduit à raison de 1000 L/ha à l'aide d'un atomiseur de la marque Solo.

Le positionnement des traitements consiste en une application hebdomadaire depuis le 25 mai (stade BBCH55).

**Tableau 16**

| Modalité N° | Traitement hebdomadaire |
|---|---|
| 1 | Non traité |
| 2 | OY 4N (100 g/ha) |
| 3 | OY 10N (250 g/ha) |

La notation est effectuée avant application. La maladie étant arrivée tardivement, la notation est effectuée le 18.08.2006.

La fréquence et l'intensité sur feuilles ont été estimées sur 50 feuilles prises au hasard, par parcelle élémentaire, soit 5 feuilles par pied de vigne.

La fréquence correspond à un pourcentage de feuilles atteintes par la maladie. L'intensité correspond à un pourcentage moyen de surface foliaire atteinte.

La moyenne des 50 feuilles est calculée pour chaque répétition. La moyenne des 4 répétitions pour chaque modalité conduit à la moyenne par modalité.

Enfin, l'efficacité selon Abott est calculée sur les intensités moyennes.

### Résultats

Les résultats et les pourcentages d'efficacité sont les suivants.

**Tableau 17 : Notation mildiou sur feuilles du 18 Août - BBCH 83**

| N° | Traitements | Fréquence/ feuilles (%) | Intensité /feuilles (%) | Efficacité (%) |
|---|---|---|---|---|
| 1 | Témoin non traité | 48.8 | 13.3 | - |
| 2 | OY4N (100g/ha) | 53.0 | 9.9 | 25.56 |
| 3 | OY10N (250g/ha) | 45.5 | 5.5 | 58.64 |

On observe une efficacité du produit aux 2 doses testées, soit 100 et 250 g/ha.

## Revendications

1. Utilisation de parois ou écorces de levure(s) en tant que matière active pour le traitement ou la protection des plantes contre les maladies provoquées par des agents pathogènes ou pour l'induction ou
la stimulation chez une plante de défenses naturelles contre des agents pathogènes.

2. Utilisation selon la revendication 1, **caractérisée en ce que** la plante est choisie parmi les graminées et dicotylédones, les plantes annuelles, bisannuelles et pérennes, les légumes, céréales, les oléagineux, les protéagineux, les pommes de terre, betteraves, cannes à sucre, tabac, les plantes ligneuses, les arbres, fruitiers ou non, les vignes et les végétaux d'ornement.

3. Utilisation selon la revendication 1 ou 2, **caractérisée en ce que** la plante est un arbre fruitier.

4. Utilisation selon l'une quelconque des revendications précédentes, **caractérisée en ce que** l'agent pathogène est un champignon, un virus. une bactérie, un mycoplasme, un spiroplasme ou un viroïde.

5. Utilisation selon la revendication 4, **caractérisée en ce que** l'agent pathogène est choisi parmi les champignons des genres Alternaria spp, Ascochyta spp, Botrytis spp, Bremia spp, Cercospora spp, Cladosporium spp, Colletotrichum spp, Erysiphe spp, Fusarium spp, Gloeosporium spp, Guignardia spp, Helminthosporium spp , Marssonina spp. Monilia spp, Mycosphaerella spp, Penicilium spp, Peronospora spp, Pezicula spp. Phragmidium spp, Phytophtora spp, Plasmopara spp, Podosphaera spp, Pseudocercosporella spp, Pseudoperonospora spp, Pseudopeziza spp, Puccinia spp, Pythium spp. Ramularia spp, Rhizoctonia spp, Rhizopus spp. Rynchosporium spp. Sclerotinia spp. Septoria spp, Sphaerotheca spp, Taphrina spp, Uncinula spp, Ustilago spp et Venturia spp.

6. Utilisation selon l'une quelconque des revendications précédentes, **caractérisée en ce que** les parois ou écorces de levure(s) sont du genre Saccharomyces.

7. Utilisation selon l'une quelconque des revendications précédentes, **caractérisée en ce que** les parois ou écorces de levure sont susceptibles d'être obtenues par lyse des cellules de levures, séparation des parties solubles et insolubles, puis récupération de la partie insoluble.

8. Utilisation selon la revendication 7, **caractérisée en ce que** la partie insoluble est récupérée par élimination de la partie soluble par centrifugation.

9. Utilisation selon l'une quelconque des revendications précédentes, **caractérisée en ce que** les parois ou écorces de levures sont délipidées.

10. Utilisation selon l'une quelconque des revendications précédentes, **caractérisée en ce que** les parois ou écorces de levures sont en outre associées avec un ou plusieurs agents de formulation.

11. Utilisation selon l'une quelconque des revendications précédentes, **caractérisée en ce que** les parois ou écorces de levures sont en outre associées à un agent fongicide, antiviral ou antibactérien.

12. Utilisation selon la revendication 11, dans laquelle l'agent fongicide est choisi parmi les fongicides agrochimiques organiques ou les fongicides minéraux inorganiques à base de soufre et/ou de cuivre.

13. Utilisation selon la revendication 12, dans laquelle les fongicides agrochimiques organiques sont choisis parmi les chloronitriles, les carbamates, les phtalimides, les sulfamides, les guanidines, les quinones, les quinoléines, les thiadiazines, les anilides, hydroxyanilides, les phénylamides, les imidazolinones, oxazolidinediones, les strobilurines, les cyanoimidazoles, le fluazinam, le dinocap, le sithiofam, les dicarboximides, le fludioxonil, les organo-phosporés, le propamocarbe HCl, la diphénylamine, les pyridylamines, les inhibiteurs de la biosynthèse des stérols, les imidazoles, pyrimidines, les hydroxypyrimidines, les anilinopyrimidines, les triazoles, la spiroxamine, les morpholines et les pipéridines, le fenhexamid, l'hymexazol, le zoxamide, le diéthofencarbe, les benzimidazoles, le pencycuron, le quinoxyfène, l'iprovalicarbe, le cymoxanil, le dimethomorphe, les phosphonates et les triazines.

14. Utilisation selon l'une quelconque des revendications précédentes, **caractérisée en ce que** les parois ou écorces de levures sont en outre associées avec un ou plusieurs composés éliciteurs de défenses chez les plantes choisis parmi l'acide b-aminobutyrique, l'acide 2,6-dichloroisonicotinique, l'acibenzolar-s-méthyl ou certains extraits d'algues.

15. Utilisation selon l'une quelconque des revendications précédentes, **caractérisée en ce que** les parois ou écorces de levures sont dans une composition phytosanitaire concentrée, à formulation sèche ou liquide.

16. Utilisation selon l'une quelconque des revendications précédentes, **caractérisée en ce que** les parois ou écorces de levures sont dans une composition prête à l'emploi.

17. Utilisation selon l'une quelconque des revendications précédentes, **caractérisée en ce que** les parois ou écorces de levures sont administrées par pulvérisation foliaire ou au sol.

18. Utilisation selon l'une quelconque des revendications précédentes, **caractérisée en ce que** les parois ou écorces de levures sont administrées aux racines par pulvérisation au sol, incorporation mécanique, en mélange avec des engrais, des amendements, en pré-mix, ou autres.

19. Utilisation selon l'une quelconque des revendications précédentes, **caractérisée en ce que** les parois ou écorces de levures sont administrées sur tout ou une partie de la plante, choisie parmi les feuilles, les tiges, les fleurs, les fruits, le tronc ou les racines.

20. Utilisation selon l'une quelconque des revendications précédentes, **caractérisée en ce que** les parois ou écorces de levures sont appliquées ou utilisées à une dose efficace supérieure à 1 mg/l d'écorces ou parois de levure lorsque le produit est appliqué par pulvérisation jusqu'à la limite du ruissellement, ou supérieure à 1 g/ha dans les cas de pulvérisation à faible volume d'eau.

21. Utilisation selon la revendication précédente, **caractérisée en ce que** les parois ou écorces de levures sont appliquées ou utilisées à une dose efficace comprise entre 1 et 250 mg/l d'écorces ou parois de levure lorsque le produit est appliqué par pulvérisation jusqu'à la limite du ruissellement, ou entre 1 et 250 g/ha dans les cas de pulvérisation à faible volume d'eau.

22. Utilisation selon l'une quelconque des revendications précédentes, **caractérisée en ce que** les parois ou écorces de levures sont utilisées en alternance et/ou en combinaison avec un ou plusieurs autres traitements.

23. Utilisation selon la revendication 1, pour prévenir ou freiner le développement de pathogènes résistant à une famille de substances actives, **caractérisée en ce que** la plante est traitée par les écorces ou parois de levure(s), en vue de réduire la pression de sélection des souches résistantes à la dite famille de substances actives, ou **en ce que** le(s) traitement(s) de la plante avec une substance de la dite famille de substances actives est (sont) alterné(s) ou combiné(s) avec un (des) traitement(s) de ladite plante par les écorces ou parois de levure(s).

24. Utilisation selon l'une quelconque des revendications précédentes, **caractérisée en ce que** les parois ou écorces de levure(s) sont issues de Saccharomyces cerevisiae.

## Patentansprüche

1. Verwendung von Zellwänden bzw. Rinden von Hefe(n) als Wirkstoff zur Behandlung oder zum Schutz von Pflanzen gegen Krankheiten, die von Krankheitserregern ausgelöst werden, oder zum Induzieren oder Stimulieren der natürlichen Abwehr einer Pflanze gegen Krankheitserreger.

2. Verwendung nach Anspruch 1, **dadurch gekennzeichnet, dass** die Pflanze ausgewählt ist aus Gräsern, zweikeimblättrigen Pflanzen, einjährigen, zweijährigen oder ausdauernden Pflanzen, Gemüsepflanzen, Getreide, Ölpflanzen, Eiweißpflanzen, Kartoffeln, Rüben, Zuckerrohr, Tabak, Holzgewächsen, Bäumen, Obstbäumen oder anderen, Weinreben und Zierpflanzen.

3. Verwendung nach Anspruch 1 oder 2, **dadurch gekennzeichnet, dass** die Pflanze ein Obstbaum ist.

4. Verwendung nach einem der vorstehenden Ansprüche, **dadurch gekennzeichnet, dass** der Krankheitserreger ein Pilz, ein Virus, ein Bakterium, ein Mycoplasma, ein Spiroplasma oder ein Viroid ist.

5. Verwendung nach Anspruch 4, **dadurch gekennzeichnet, dass** der Krankheitserreger ausgewählt ist aus den Pilzen der Gattungen Alternaria spp., Ascochyta spp., Botrytis spp., Bremia spp., Cercospora spp., Cladosporium spp., Colletotrichum spp., Erysiphe spp., Fusarium spp., Gloeosporium spp., Guignardia spp., Helminthosporium spp., Marssonina spp., Monilia sppp., Mycosphaerella spp., Penicilium spp., Peronospora spp., Pezicula spp., Phragmidium spp., Phytophtora spp., Plasmopara spp., Podosphaera spp., Pseudocercosporella spp., Pseudoperonospora spp., Pseudopeziza spp., Puccinia spp., Pythium spp., Ramularia spp., Rhizoctonia spp., Rhizopus spp., Rynchosporium spp., Sclerotinia spp., Septoria spp., Sphaerotheca spp., Taphrina spp., Uncinula spp., Ustilago spp. und Venturia spp.

6. Verwendung nach einem der vorstehenden Ansprüche, **dadurch gekennzeichnet, dass** die Zellwände bzw. Rinden von Hefe(n) von der Gattung Saccharomyces sind.

7. Verwendung nach einem der vorstehenden Ansprüche, **dadurch gekennzeichnet, dass** die Hefezellwände bzw. -rinden erhalten werden können durch Lyse von Hefezellen, Trennung der löslichen von den unlöslichen Teilen und anschließendem Gewinnen des unlöslichen Teils.

8. Verwendung nach Anspruch 7, **dadurch gekennzeichnet, dass** der unlösliche Teil durch Entfernen des löslichen Teils mittels Zentrifugieren gewonnen wird.

9. Verwendung nach einem der vorstehenden Ansprüche, **gekennzeichnet durch** Lipidentfernung aus den Zellwänden bzw. Rinden von Hefe.

10. Verwendung nach einem der vorstehenden Ansprüche, **dadurch gekennzeichnet, dass** die Zellwände bzw. Rinden von Hefen des Weiteren mit einem oder mehreren Formulierungsmittel(n) kombiniert werden.

11. Verwendung nach einem der vorstehenden Ansprüche, **dadurch gekennzeichnet, dass** die Zellwände bzw. Rinden von Hefen ferner mit einem Fungizid, einem antiviralen Mittel oder einem antibakteriellen Mittel kombiniert werden.

12. Verwendung nach Anspruch 11, wobei das Fungizid ausgewählt ist aus organischen agrochemischen Fungiziden, anorganischen mineralischen Fungiziden auf Schwefel und/oder Kupferbasis.

13. Verwendung nach Anspruch 12, wobei die organischen agrochemischen Fungizide ausgewählt sind aus Chloronitrilen, Carbamaten, Phtalimiden,
Sulfamiden, Guanidinen, Chinonen, Chinolinen, Thiadiazinen, Aniliden, Hydroxyaniliden, Phenylamiden, Imidazolinonen, Oxazolidindionen, Strobilurinen, Cyano-Imidazolen, Fluazinam, Dinocap, Sithiofam, Dicarboxamiden, Fludioxonil, organischen Phosphorverbindungen, Proparmocarb-HCl, Diphenylamin, Pyridylaminen, Inhibitoren der Sterolbiosynthese, Imidazolen, Pyrimidinen, Hydroxypyrimidinen, Anilinpyrimidinen, Triazolen, Spiroxamin, Morpholinen und Piperidinen, Fenhexamid, Hymexazol, Zoxamid, Diethofencarb, Benzimidazolen, Pencycuron, Quinoxyfen, Iprovalicarb, Cymoxanil, Dimethomorph, Phosphonaten und Triazinen.

14. Verwendung nach einem der vorstehenden Ansprüche, **dadurch gekennzeichnet, dass** die Zellwände bzw. Rinden der Hefen des Weiteren mit einer oder mehreren die Pflanzenabwehr auslösende Verbindungen kombiniert sind, ausgewählt aus b-Aminobuttersäure, 2,6-Dichlorisonicotinsäure, Acibenzolar-S-Methyl oder bestimmten Algenextrakten.

15. Verwendung nach einem der vorstehenden Ansprüche, **dadurch gekennzeichnet, dass** die Zellwände bzw. Rinden der Hefen in einer konzentrierten phytosanitären Zusammensetzung als Trocken- oder Flüssigformulierung vorliegen.

16. Verwendung nach einem der vorstehenden Ansprüche, **dadurch gekennzeichnet, dass** die Zellwände bzw. Rinden der Hefen in einer gebrauchsfertigen Zusammensetzung vorliegen.

17. Verwendung nach einem der vorstehenden Ansprüche, **dadurch gekennzeichnet, dass** die Zellwände bzw. Rinden der Hefen mittels Besprühen der Blätter oder über den Boden verabreicht werden.

18. Verwendung nach einem der vorstehenden Ansprüche, **dadurch gekennzeichnet, dass** die Zellwände bzw. Rinden der Hefen den Wurzeln mittels Besprühen des Bodens, mechanischer Einarbeitung, in Mischung mit Düngern, Bodenverbesserungsmitteln, in einer Fertigmischung oder anderen verabreicht werden.

19. Verwendung nach einem der vorstehenden Ansprüche, **dadurch gekennzeichnet, dass** die Zellwände bzw. Rinden der Hefen der Pflanze als Ganzes oder einem Teil der Pflanze, ausgewählt aus den Blättern, den Stängeln, den Blüten, den Früchten, dem Stamm oder den Wurzeln, verabreicht werden.

20. Verwendung nach einem der vorstehenden Ansprüche, **dadurch gekennzeichnet, dass** die Zellwände bzw. Rinden der Hefen in einer wirksamen Dosis verabreicht oder verwendet werden, die höher ist als 1 mg/l Heferinden bzw. -zellwände, wenn das Produkt mittels Besprühen bis zur vollständigen Benetzung angewendet wird, oder die höher ist als 1 g/ha im Fall des Besprühens mit einer geringen Wassermenge.

21. Verwendung nach dem vorstehenden Anspruch, **dadurch gekennzeichnet, dass** die Zellwände bzw. Rinden der Hefen in einer wirksamen Dosis zwischen 1 bis 250 mg/l Rinden bzw. Zellwände von Hefen verabreicht oder verwendet werden, wenn das Produkt mittels Besprühen bis zur vollständigen Benetzung angewendet wird, oder zwischen 1 und 250 g/ha im Fall des Besprühens mit einer geringen Wassermenge.

22. Verwendung nach einem der vorstehenden Ansprüche, **dadurch gekennzeichnet, dass** die Zellwände bzw. Rinden der Hefen abwechselnd und/oder in Kombination mit einer oder mehreren anderen Behandlungen verwendet werden.

23. Verwendung nach Anspruch 1, um der Entwicklung von Pathogenen, die gegen eine Gruppe von Wirkstoffen resistent sind, vorzubeugen oder diese zu verlangsamen, **dadurch gekennzeichnet, dass** die Pflanze mit den Rinden bzw. Zellwänden von Hefe(n) behandelt wird, um den Selektionsdruck für gegen die Wirkstoffgruppe resistente Stämme zu verringern, oder **dadurch gekennzeichnet, dass** die Behandlung(en) der Pflanze mit einem Stoff der Wirkstoffgruppe mit (einer) Behandlung(en) der Pflanze mit Rinden bzw. Zellwänden von Hefe(n) abgewechselt oder kombiniert wird/werden.

24. Verwendung nach einem der vorstehenden Ansprüche, **dadurch gekennzeichnet**, das die Zellwände bzw. Rinden der Hefe(n) von *Saccharomyces cerevisiae* stammen.

## Claims

1. Use of yeast cell walls as an active ingredient to treat or protect plants against disease caused by pathogenic agents or to induce or stimulate the immune defenses of a plant against pathogenic agents.

2. Use according to claim 1, wherein the plant is selected from graminaceae and dicotyledons, annual, biennial and perennial plants, vegetables, cereals, oil seed, proteaginous, potatoes, beets, sugar cane, tobacco, ligneous plants, trees, fruit-trees or not, vines, ornamental plants.

3. Use according to claim 1 or 2, wherein the plant is a fruit-tree.

4. Use according to any one of preceeding claims, wherein the pathogenic agent is a fungus, virus, bacteria, mycoplasm, spiroplams or viroid.

5. Use according to claim 4, wherein the pathogenic agent is selected from the species of fungi Alternaria spp, Ascochyta spp, Botrytis spp, Bremia spp, Cercospora spp, Cladosporium spp, Colletotrichum spp, Erysiphe spp, Fusarium spp, Gloeosporium spp, Guignardia spp, Helminthosporium spp, Marssonina spp, Monilia spp, Mycosphaerella spp, Penicilium spp, Peronospora spp, Pezicula spp, Phragmidium spp, Phytophtora spp, Plasmopara spp, Podosphaera spp, Pseudocercosporella spp, Pseudoperonospora spp, Pseudopeziza spp, Puccinia spp, Pythium spp, Ramularia spp, Rhizoctonia spp, Rhizopus spp, Rynchosporium spp, Sclerotinia spp, Septoria spp, Sphaerotheca spp, Taphrina spp, Uncinula spp, Ustilago spp and Venturia spp.

6. Use according to any one of preceeding claims, wherein yeast cell walls are of the Saccharomyces species.

7. Use according to any one of preceeding claims, wherein yeast cell walls are obtainable by the lysis of yeast cells, separation of the soluble and insoluble fractions, then the collection of the insoluble fraction.

8. Use according to claim 7, wherein the insoluble fraction is collected by removing the soluble fraction by centrifugation.

9. Use according to any one of preceeding claims, wherein yeast cell walls are dilipidated.

10. Use according to any one of preceeding claims, wherein yeast cell walls are further associated with one or several formulation agents.

11. Use according to any one of preceeding claims, wherein yeast cell walls are further associated with a fungicidal, antiviral or antibacterial agent.

12. Use according to claim 11, wherein the fungicidal agent is chosen from organic agrochemical fungicides or inorganic mineral fungicides based on sulphur and/or copper.

13. Use according to claim 12, wherein the organic agrochemical fungicides are chosen from chloronitriles, carbamates, phtalimides, sulphonamides, guanidines, quinones, quinolines, thiadiazines, anilides, hydroxyanilides, phenylamides, imidazolinones, oxazolidinediones, strobilurines, cyanoimidazoles, fluazinam, dinocap, silthiofam, dicarboximides, fludioxonil, organophosphorus, propamocarb HCl, diphenylamine, pyridylamines, sterol biosynthesis inhibitors (SBI), imidazoles, pyrimidines, hydroxypyrimidines, anilinopyrimidines, triazoles, spiroxamine, morpholines and piperidines, fenhexamid, hymexazol, zoxamide, diethofencarb, benzimidazoles, pencycuron, quinoxyfen, iprovalicarb, cymoxanil, dimethomorph, phosphonates and triazines.

14. Use according to any one of preceeding claims, wherein yeast cell walls are further associated with one or more plant immune defense elicitors, chosen from b-aminobutyric acid, 2,6-dichloroisonicotinic acid, acibenzolar-s-methyl, or some algae extracts.

15. Use according to any one of preceeding claims, wherein yeast cell walls are in a concentrated phytosanitary composition, in dry or liquid form.

16. Use according to any one of preceeding claims, wherein yeast cell walls are in a ready-to-use composition.

17. Use according to any one of preceeding claims, wherein yeast cell walls are administered by spraying the leaves or soil.

18. Use according to any one of preceeding claims, wherein yeast cell walls are administered to the roots by spraying the soil, mechanical incorporation, mixed with fertiliser, soil improvement, pre-mix or others.

19. Use according to any one of preceeding claims, wherein yeast cell walls are administered to the whole plant or a part thereof, chosen from the leaves, stem, flowers, fruits, trunk or roots.

20. Use according to any one of preceeding claims, wherein yeast cell walls are applied or used in an efficient dose higher than 1mg/l of yeast cell walls when the product is applied by spraying up to the point of run-off, or higher than 1g/ha when spraying using a small amount of water.

21. Use according to any one of preceeding claims, wherein yeast cell walls are applied or used in an efficient dose comprising from 1 to 250 mg/l of yeast cell walls when the product is applied by spraying up to the point of run-off or from 1 to 250 g/ha when spraying with a small amount of water.

22. Use according to any one of preceeding claims, wherein yeast cell walls are used in alternation and/or in combination with one or several other treatments.

23. Use according to claim 1, to prevent or limit the development of resistant pathogens to a family of active substances, wherein the plant is treated with yeast cell walls for reducing the selection pressure of resistant strains to said family of active substances or in the treatment(s) of the plant with a substance from said family of active substances in alternation or combination with treatment(s) of said plant with yeast cell walls.

24. Use according to any one of preceeding claims, wherein yeast cell walls are derived from Saccharomyces cerevisiae.
